# FASCICULE DE BREVET EUROPEEN

(11) **EP 0 968 152 B1**
(45) Date de publication et mention de la délivrance du brevet: **19.06.2002**
(21) Numéro de dépôt: 98913815.1
(22) Date de dépôt: 03.03.1998
(51) Int. Cl.: C04B 35/66, C21B 7/12

(54) **COMPOSITION DE MASSE REFRACTAIRE CARBONEE**
ZUSAMMENSETZUNG FEUERFESTER KOHLENSTOFFMASSEN
CARBON CONTAINING REFRACTORY COMPOSITION

(30) Priorité: 14.03.1997 FR 9703127
(43) Date de publication de la demande: 05.01.2000
(73) Titulaire: SOCIETE DES TERRES REFRACTAIRES DU BOULONNAIS, F-62152 Neufchatel-Hardelot (FR)
(72) Inventeur: LAMBERT, Fabienne, F-62200 Boulogne sur Mer (FR); RUER, Corinne, F-62280 Saint Martin Les Boulogne (FR); BONNAMY, Sylvie, F-45100 Orléans (FR); HUBERT, Pascal, F-62152 Neufchâtel Hardelot (FR); ROUZAUD, Jean-No[l, F-45000 Orléans (FR)
(74) Mandataire: Armengaud Ainé, Alain
(86) Numéro de dépôt international: FR9800413
(87) Numéro de publication internationale: WO9841487

(56) Documents cités:
- EP-A- 0 500 061
- GB-A- 1 485 526
- GB-A- 2 106 494

## Description

L'invention est relative à des compositions de pâtes réfractaires et plus particulièrement elle vise des formulations de pâtes réfractaires carbonées à liant organique, destinées notamment à des applications de masse de bouchage. Cette masse est généralement constituée d'un matériau réfractaire multiconstituant non façonné et utilisée pour l'obturation de trous de coulée de réacteur métallurgique.

La composition de ces pâtes réfractaires a été modifiée au cours du temps suivant les exigences de productivité, les avancées technologiques et les normes de sécurité.

Actuellement, il existe de nombreuses formulations pour ce type de matériau généralement anhydre. Ces formulations se différencient le plus souvent par la nature du liant qui permet d'enrober les autres constituants et qui avec la charge carbonée est destiné à assurer la plasticité du produit à froid, et à développer des liaisons carbones à chaud.

On trouve notamment des masses liées au goudron et des masses liées à la résine. La composition moyenne de ces pâtes est généralement de 70 % en poids de matières minérales réfractaires d'origine naturelle ou artificielle et de 10 % de matériaux carbonés solides à température ambiante (charbons ou coke) additionnés de liants liquides à température ambiante (goudron, résines...) enrobant les matières minérales et les matériaux carbonés. La nature des composants, leur quantité, leur qualité et leur granulométrie sont adaptées pour chaque application et en fonction du type d'installation de réacteur métallurgique.

Le brevet européen 0 046 473 fait état de pâte réfractaire faite de 15 % à 20 % en poids de liant obtenue par combinaison d'un produit de synthèse de la famille des glycérols additionné d'un accélérateur de prise, de 5 à 15 % en poids d'une matière carbonée d'origine végétale (charbon de bois) et de 70 % à 80 % en poids d'éléments minéraux de base tels que des argiles réfractaires de type kaolinite et des agrégats réfractaires (sables silicoalumineux, magnésie, dolomie, bauxite...).

On connait par ailleurs de par notamment les brevets (US-A-2 709 659, US-A-2 938 807, FR-A-2 232 596) qu'il est possible de remplacer les goudrons de houille par des résines de type furanique ou phénolique.

Actuellement, les agrégats réfractaires et les minéraux utilisés dans les masses de bouchage font souvent appel à des matériaux alumineux classiques (chamotte, bauxite, corindon...) pouvant contenir des ajouts de carbure de silicium, zircon, nitrure de silicium, ferrosilicium... ; on peut également adjoindre à ces compositions, du chrome ou des poudres métalliques.

Il n'existe pas de limitations particulières quant à la nature des constituants des agrégats réfractaires. Le brevet FR-2 537 565 décrit l'emploi de magnésie de spinelle et d'alumine auxquels a été mélangé du carbure de bore et un alliage aluminium-silicium afin d'augmenter la résistance à la corrosion.

Cependant, quelles que soient la nature, la quantité, la qualité et la granulométrie de chacun des composants, la pâte réfractaire est constituée majoritairement d'éléments minéraux et/ou d'agrégats réfractaires.

Il est connu que les blocs de carbone pour creuset de haut fourneau, sont constitués d'agrégats d'anthracite calciné à haute température (environ 1700°C) et/ou de graphite et de liant (exemple : brai de goudron de houille). L'ensemble est pyrolysé à environ 1150°C, la cuisson et la montée en température durant environ 300 à 400 heures.

Les proportions relatives agrégats carbonés/liant sont approximativement de 90 % et 10 % en poids. Certains additifs (alumine, silicium, silice, carbure de silicium) peuvent être employés en vue d'améliorer les performances des blocs de carbone telles que la taille des pores, la résistance aux alcalins ou la résistance à la dissolution par la fonte.

Le brevet japonais 55 107 749 préconise l'addition de poudre de magnésium, d'alumine et de silicium afin d'empêcher les phénomènes d'oxydation mais cela modifie la conductivité thermique. En effet, les blocs de carbone constitués en partie ou totalement d'agrégats de graphite ont une conductivité thermique plus élevée, ce qui favorise la formation de garni en service et assure une protection du creuset.

La présente invention a pour but de proposer une alternative aux pâtes réfractaires organo-minérales sous la forme de pâtes composées essentiellement ou totalement de carbone, afin de présenter d'une part, une meilleure compatibilité avec la nature du matériau constituant le réceptacle métallurgique, et d'autre part de permettre une réduction de la quantité de pondéreux nécessaire aux masses de bouchage.

A cet effet, la pâte réfractaire carbonée à base notamment d'anthracite et à liant organique pour l'obturation de trous de coulée de réacteur métallurgique, selon l'invention se caractérise en ce que la perte au feu à 1000°C est au moins supérieure à 80 %, la masse volumique apparente du produit à cru est comprise entre 900 et 1650 kg/m³ et la masse volumique apparente après cuisson à 800°C est comprise entre 600 et 1350 kg/m³.

D'autres caractéristiques et avantages de la présente invention ressortiront de la description faite ci-après.

Selon un mode préféré de réalisation de la pâte réfractaire objet de l'invention, sa formulation comporte moins de 20 % en poids de matières minérales réfractaires ou non. Elle comprend également tout ou partie des composants suivants :
- un anthracite faisant office d'agrégat principal, dans une proportion comprise entre 40 et 80 %, de préférence située dans l'intervalle 50 à 60 %, notamment très proche de 51 ou 59 % en poids,
- un charbon poussant (charbon de haut rang ayant un taux de matières volatiles et un PRV (Pouvoir Réflecteur de la Vitrinite) respectivement voisins de 20 % et de 1.5), dans une proportion comprise entre 10 et 30 %, préférentiellement située dans l'intervalle 15 à 25 %, notamment de l'ordre de 17 % en poids,
- d'autres matières carbonées, notamment du graphite, du charbon gras, 1/2 gras ou 3/4 gras, dans une proportion comprise entre 1 et 25 %, préférentiellement située dans l'intervalle 15 à 20 %, notamment de l'ordre de 17 % en poids,
- au moins un liant organique, dans une proportion comprise entre 5 et 30 %, préférentiellement située dans l'intervalle 10 à 20 %, notamment de l'ordre de 15 % en poids, et laissant au moins 5 % en poids de carbone fixe après pyrolyse.

La pâte réfractaire carbonée ainsi composée, dispose d'une perte au feu, notamment à 1000°C, supérieure à 80 % en poids, une masse volumique apparente en cru comprise entre 900 et 1650 kg/m³ et après cuisson au alentour de 800°C, comprise entre 600 et 1350 kg/m³.

On emploie un charbon poussant, car il possède la propriété d' avoir un indice de gonflement relativement élevé (8 à 8.5) mais son emploi en présence de matériaux non poussants (exemple, anthracite) permet de moduler la pression et d'obtenir une pâte réfractaire n'ayant pas de retrait mais possédant un certain gonflement permettant ainsi d'obtenir une meilleure cohésion dans le trou de coulée.

La masse réfractaire carbonée comporte éventuellement des matières minérales correspondant aux cendres contenues dans le charbon, l'anthracite ou le graphite. Elle contient également des agents tensio-actifs dans une proportion inférieure à 5 % en poids, appartenant aux familles des cationiques, des non ioniques, des ioniques, des mixtes ou des anioniques.

D'autres matières minérales de type argile, sables silicoalumineux, alumine, carbure de silicium, nitrure de silicium peuvent être ajoutées à la masse réfractaire carbonée, à titre d'additif, pour améliorer l'enrobage ou la résistance à l'abrasion et à l'oxydation, dans une proportion comprise entre 1 et 20 %, préférentiellement située dans l'intervalle 5 à 10 %, notamment de l'ordre de 8 à 9 % en poids.

Les liants organiques peuvent être dérivés de la carbochimie (goudron, brai), de la pétrochimie (bitume, bottom oils), de l'industrie des thermodurcissables (résines phénoliques, furaniques). Les liants incorporés à la masse réfractaire selon l'invention disposent par ailleurs d'une très faible toxicité, ils possèdent notamment une teneur en benzo-(a)-pyrène inférieure à 50 ppm.

Une telle formulation conduit à la diminution de la densité de la pâte réfractaire, ce qui permet à l'utilisateur de réduire le tonnage usité.

D'autre part, de par sa forte teneur en carbone, la pâte réfractaire possède une conductivité thermique accrue, une meilleure compatibilité avec les blocs de carbone du haut fourneau et une mouillabilité moindre par les laitiers.

Sont donnés ci-après à titre d'exemple, les formulations de masses réfractaires ayant des compositions selon l'invention :
- Exemple 1 :: Anthracite : 51 % en poids,
Charbon poussant : 17 % en poids,
Graphite : 17 % en poids,
Liants : 15 % en poids.
- Exemple 2 :: Anthracite : 42 % en poids,
Charbon poussant : 17 % en poids,
Graphite : 17 % en poids,
Argile : 9 % en poids,
Liants : 15 % en poids.
- Exemple 3 :: Anthracite : 42 % en poids,
Charbon poussant : 17 % en poids,
Graphite : 17 % en poids,
Sable : 9 % en poids,
Liants : 15 % en poids.
- Exemple 4 :: Anthracite : 42 % en poids,
Charbon poussant : 17 % en poids,
Graphite : 17 % en poids,
Alumine : 8 % en poids,
Liants : 16 % en poids.
- Exemple 5 :: Anthracite : 50 % en poids,
Charbon poussant : 16 % en poids,
Graphite : 16 % en poids,
Liants : 18 % en poids.
- Exemple 6 :: Anthracite : 70 % en poids,
Charbon poussant : 10 % en poids,
Graphite : 6 % en poids,
Liants : 14 % en poids.

Les proportions relatives entre les divers composants formant la masse réfractaire carbonée selon l'invention assurent une bonne cohésion et une plasticité adéquate pour l'obtention si besoin de pièces de forme par des procédés de filage ou de pressage, ces pièces ayant bien entendu des propriétés mécaniques et chimiques suffisantes pour répondre aux conditions d'utilisation.

## Revendications

1. Pâte réfractaire carbonée à base notamment d'anthracite et à liant organique pour l'obturation de trous de coulée de réacteur métallurgique, **caractérisée en ce que** la perte au feu à 1000°C est au moins supérieure à 80 %, la masse volumique apparente du produit à cru est comprise entre 900 et 1650 kg/m³ et la masse volumique apparente après cuisson à 800°C est comprise entre 600 et 1350 kg/m³.

2. Pâte réfractaire carbonée selon la revendication 1, **caractérisée en ce qu'**elle comprend tout ou partie des composants suivants :
- un anthracite faisant office d'agrégat principal, dans une proportion comprise entre 40 et 80 % en poids,
- un charbon poussant dans une proportion comprise entre 10 et 30 % en poids,
- d'autres matières carbonées dans une proportion comprise entre 1 et 25 % en poids,
- au moins un liant organique, dans une proportion comprise entre 5 et 30 % en poids, et laissant au moins 5 % en poids de carbone fixe après pyrolyse,
- une matière minérale dans une proportion comprise entre 1 et 20 % en poids,

3. Pâte réfractaire carbonée selon la revendication 1 ou 2, **caractérisée en ce qu'**elle comprend tout ou partie des composants suivants :
- un anthracite faisant office d'agrégat principal, dans une proportion préférentiellement située dans l'intervalle 50 à 60 % en poids,
- un charbon poussant, dans une proportion préférentiellement située dans l'intervalle 15 à 25 % en poids,
- d'autres matières carbonées, dans une proportion préférentiellement située dans l'intervalle 15 à 20 % en poids,
- au moins un liant organique, dans une proportion préférentiellement située dans l'intervalle 10 à 20 % en poids.
- une matière minérale dans une proportion préférentiellement située dans l'intervalle 5 à 10 % en poids,

4. Pâte réfractaire carbonée selon l'une quelconque des revendications précédentes, **caractérisée en ce qu'**elle comprend tout ou partie des composants suivants :
- un anthracite dans une proportion très proche de 51 % ou 59 % en poids,
- un charbon poussant dans une proportion de l'ordre de 17 % en poids,
- d'autres matières carbonées, dans une proportion de l'ordre de 17 % en poids,
- au moins un liant organique, dans une proportion de l'ordre de 15 % en poids,
- une matière minérale dans une proportion de l'ordre de 8 à 9 % en poids.

5. Pâte réfractaire carbonée selon l'une quelconque des revendications précédentes, **caractérisée en ce qu'**elle contient des agents tensio-actifs dans une proportion inférieure à 5 %.

6. Pâte réfractaire carbonée selon l'une quelconque des revendications précédentes, caractérisée en ce les liants incorporés disposent d'une très faible toxicité, ils possèdent notamment une teneur en benzo-(a)-pyrène inférieure à 50 ppm.

## Patentansprüche

1. Kohlenstoffhaltige feuerfeste Masse auf der Basis von insbesondere Anthrazit und mit einem organischen Bindemittel zum Verschließen von Gießöffnungen eines metallurgischen Reaktors, **dadurch gekennzeichnet, dass** der Glühverlust bei 1000 °C mindestens mehr als 80 %, die Rohdichte des Rohprodukts 900 bis 1650 kg/m³ und die Rohdichte nach dem Brennen bei 800 °C 600 bis 1350 kg/m³ beträgt.

2. Kohlenstoffhaltige feuerfeste Masse nach Anspruch 1, **dadurch gekennzeichnet, dass** sie vollständig oder teilweise folgende Komponenten umfasst:
- Anthrazit, der als Hauptaggregat dient, mit einem Anteil von 40 bis 80 Gew.-%,
- Blähkohle mit einem Anteil von 10 bis 30 Gew.-%,
- weitere kohlenstoffhaltige Stoffe mit einem Anteil von 1 bis 25 Gew.-%,
- wenigstens ein organisches Bindemittel, das einen Anteil von 5 bis 30 Gew.-% ausmacht und nach Pyrolyse mindestens 5 Gew.-% fixen Kohlenstoff hinterlässt, und
- einen Mineralstoff mit einem Anteil von 1 bis 20 Gew.-%.

3. Kohienstoffhaltige feuerfeste Masse nach Anspruch 1 oder 2, **dadurch gekennzeichnet, dass** sie vollständig oder teilweise folgende Komponenten umfasst:
- Anthrazit, der als Hauptaggregat dient, mit einem Anteil, der vorzugsweise im Bereich von 50 bis 60 Gew.-% liegt,
- Blähkohle mit einem Anteil, der vorzugsweise im Bereich von 15 bis 25 Gew.-% liegt,
- weitere kohlenstoffhaltige Stoffe mit einem Anteil, der vorzugsweise im Bereich von 15 bis 20 Gew.-% liegt,
- wenigstens ein organisches Bindemittel mit einem Anteil, der vorzugsweise im Bereich von 10 bis 20 Gew.-% liegt, und
- einen Mineralstoff mit einem Anteil, der vorzugsweise im Bereich von 5 bis 10 Gew.-% liegt.

4. Kohlenstoffhaltige feuerfeste Masse nach einem der vorhergehenden Ansprüche, **dadurch gekennzeichnet, dass** sie vollständig oder teilweise folgende Komponenten umfasst:
- Anthrazit mit einem Anteil von sehr nahe 51 oder 59 Gew.-%,
- Blähkohle mit einem Anteil von etwa 17 Gew.-%,
- weitere kohlenstoffhaltige Stoffe mit einem Anteil von etwa 17 Gew.-%,
- wenigstens ein organisches Bindemittel mit einem Anteil von etwa 15 Gew.-% und
- einen Mineralstoff mit einem Anteil von etwa 8 bis 9 Gew.-%.

5. Kohlenstoffhaltige feuerfeste Masse nach einem der vorhergehenden Ansprüche, **dadurch gekennzeichnet, dass** sie grenzflächenaktive Mittel mit einem Anteil von weniger als 5 % enthält.

6. Kohlenstoffhaltige feuerfeste Masse nach einem der vorhergehenden Ansprüche, **dadurch gekennzeichnet, dass** die enthaltenen Bindemittel eine sehr geringe Toxizität und insbesondere einen Gehalt an Benzo[*a*]pyren von unter 50 ppm besitzen.

## Claims

1. Refractory carbon paste more particularly based on anthracite and an organic binder for sealing metallurgical reactor pouring holes, **characterized in that** the ignition loss at 1000°C at least exceeds 80%, the apparent density of the crude product is between 900 and 1650 kg/m³ and the apparent density after baking at 800°C is between 600 and 1350 kg/m³.

2. Refractory carbon paste according to claim 1, **characterized in that** it comprises all or part of the following components:
- an anthracite serving as the main aggregate in a proportion between 40 and 80 wt.%,
- a high-grade coal in a proportion between 10 and 30 wt.%,
- other carbon materials in a proportion between 1 and 25 wt.%,
- at least one organic binder in a proportion between 5 and 30 wt.% and leaving at least 5 wt.% fixed carbon after pyrolysis and
- a mineral material in a proportion between 1 and 20 wt.%.

3. Refractory carbon paste according to claim 1 or 2, **characterized in that** it comprises all or part of the following components:
- an anthracite serving as the main aggregate, in a proportion preferably between 50 and 60 wt.%,
- a high-grade coal, in a proportion preferably between 15 and 25 wt.%,
- other carbon materials, in a proportion preferably between 15 and 20 wt.%,
- at least one organic binder, in a proportion preferably between 10 and 20 wt.% and
- a mineral material, in a proportion preferably between 5 and 10 wt.%.

4. Refractory carbon paste according to any one of the preceding claims, **characterized in that** it comprises all or part of the following components:
- an anthracite in a proportion very close to 51 or 59% wt.%,
- a high-grade coal in a proportion of approximately 17 wt.%,
- other carbon materials in a proportion of approximately 17 wt.%,
- at least one organic binder in a proportion of approximately 15 wt.% and
- a mineral material in a proportion of approximately 8 to 9 wt.%.

5. Refractory carbon paste according to one of the preceding claims, **characterized in that** it contains surfactants in a proportion below 5%.

6. Refractory carbon paste according to any one of the preceding claims, **characterized in that** the incorporated binders have a very low toxicity and in particular a benzo-(a)-pyrene content below 50 ppm.
